# EUROPEAN PATENT APPLICATION

(11) **EP 3 498 791 A1**
(43) Date of publication of application: **19.06.2019**
(21) Application number: 17839313.8
(22) Date of filing: 02.08.2017
(51) Int. Cl.: C09D 11/36, B41J 2/01, B41M 5/00

(54) **INK AND METHOD FOR PRODUCING PRINTED MATTER**

(30) Priority: 10.08.2016 JP 2016157743
(71) Applicant: Seiren Co., Ltd., Fukui-shi Fukui 918-8560 (JP)
(72) Inventor: KAWAMURA, Akihiro, Fukui-shi Fukui 918-8560 (JP)
(74) Representative: Hynell Intellectual Property AB
(86) International application number: PCT/JP2017/028116
(87) International publication number: WO 2018/030241

(57) **Abstract**

An ink comprising a fluorine resin and a solvent having a solubility parameter value (SP vale) of 7 to 11, wherein the fluorine resin having a solubility of 500 (g/L) or more in diethylene glycol diethyl ether and an hydroxyl value of 20 to 100 mg KOH/g, wherein the fluorine resin is contained in the ink in an amount of 40% by mass or less, wherein an amount of the solvent in the ink is 50% by mass or more, wherein the solvent comprises at least one glycol methyl ether acetate selected from the group consisting of diethylene glycol diethyl ether, diethylene glycol dimethyl ether, diethylene glycol isopropyl methyl ether, tripropylene glycol dimethyl ether, diethylene glycol butyl methyl ether, propylene glycol monophenyl ether, tetraethylene glycol dimethyl ether, propylene glycol monomethyl ether and ethylene glycol monobenzyl ether, or at least one acetate solvent selected from the group consisting of propylene glycol diacetate, dipropylene glycol methyl ether acetate and 1,6-hexanediol diacetate, and wherein the ink is used printed on a substrate by an inkjet printing method.

## Description

### TECHNICAL FIELD

The present invention relates to an ink and a method for producing a printed matter. In particular the present invention relates to an ink comprising a fluorine resin being excellent in weather resistance and drying characteristics, and a method for producing a printed matter.

### BACKGROUND ART

Recently attention has been paid to an ink comprising a fluorine resin as an ink for producing a printed matter being excellent in weather resistance. For example, Patent Document 1 discloses a recording liquid composition for an inkjet printer comprising a fluorine resin (A) comprising any one or both of a copolymer (A1) having a fluoroolefin-based component unit (A1-1) and a component unit (A1-2) derived from a monomer having a crosslinkable group and polyvinyliden fluoride (A2), a curing agent (B), a coloring agent (C) and a medium (D).

### PRIOR ART DOCUMENT

### Patent Document

Patent Document 1: JP 2015-086313 A

### SUMMARY OF THE INVENTION

In the ink described in Patent Document 1, water is used as a medium (solvent). Water is inexpensive and is easily handled. However, an ink prepared using water is easily dried and the ink is dried around a head, in particular, at the time of inkjet printing and stability in discharging becomes worse.

By the way, many of solvents other than water may deteriorate an epoxy resin used as an adhesive when producing a head, and easily damage the head. Therefore, in order to solve a problem with drying characteristics and stability in discharging in the case of using water, for example, blending of an anti-drying agent has been studied like the invention as described in Patent Document 1. Namely, in the case of using water which is inexpensive and is easily handled, in order to improve drying characteristics, there was a case where a technology of adding other component (anti-drying agent) was studied. However, a trial of solving a problem with the above-mentioned drying characteristics and stability in discharging paying attention to a solvent itself or properties of a fluorine resin has not been made.

The present invention was made to solve such a problem as mentioned above, and an object of the present invention is to provide an ink which allows drying characteristics and stability in discharging of an obtained ink to be improved and hardly damages a head of an inkjet recording apparatus, and a method for producing a printed matter being excellent in weather resistance using such an ink.

In one aspect of the present invention for solving the above-mentioned problem, an ink comprises a fluorine resin and a solvent having a solubility parameter value (SP value) of from 7 to 11, and the fluorine resin has a solubility of 500 (g/L) or more in diethylene glycol diethyl ether and a hydroxyl value of 20 to 100 mg KOH/g and is contained in the ink in an amount of 40% by mass or less. An amount of the solvent in the ink is 50% by mass or more. The ink comprises at least one glycol ether selected from the group consisting of diethylene glycol diethyl ether, diethylene glycol dimethyl ether, diethylene glycol isopropyl methyl ether, tripropylene glycol dimethyl ether, diethylene glycol butyl methyl ether, propylene glycol monophenyl ether, tetraethylene glycol dimethyl ether, propylene glycol monomethyl ether and ethylene glycol monobenzyl ether, or at least one acetate solvent selected from the group consisting of propylene glycol diacetate, dipropylene glycol methyl ether acetate and 1,6-hexanediol diacetate. The ink is used being applied to a substrate by an inkjet printing method.

In one aspect of the present invention for solving the above-mentioned problem, a method for producing a printed matter is a method for producing a printed matter comprising a step of applying the above-mentioned ink to a substrate by an inkjet method.

### EMBODIMENT FOR CARRYING OUT THE INVENTION

### <Ink>

An ink according to one embodiment of the present invention comprises a fluorine resin and a solvent having a solubility parameter value (SP value) of 7 to 11. The ink of the present embodiment comprises a fluorine resin and a solvent for dissolving the fluorine resin, and therefore, drying characteristics are improved as compared with, for example, a conventional ink blended with water. Therefore, the ink is excellent in stability in discharging at the time of inkjet printing. Further, for the ink, a solvent having an SP value within the above-mentioned range is used, and therefore, a head of an inkjet recording apparatus is hardly damaged. Also, by use of such an ink, a printed matter having excellent weather resistance can be obtained. Each of the fluorine resin and the solvent is explained below.

### (Fluorine resin)

The fluorine resin is blended for imparting weather resistance to a printed matter to be obtained using the ink of the present embodiment. The fluorine resin may be one which is dissolved in a solvent having a solubility parameter value (SP value) of 7 to 11 and explained later. More specifically, it is preferable that the fluorine resin of the present embodiment is a copolymer of any of various fluorine-containing monomers and a vinyl monomer. It is more preferable that the fluorine resin is a copolymer with a vinyl ether monomer among vinyl monomers. Further, it is more preferable that the fluorine resin is a copolymer of fluoroethylene and a vinyl ether monomer explained later.

Examples of the fluorine-containing monomer include tetrafluoroethylene, chlorotrifluoroethylene, trichlorofluoroethylene, hexafluoropropylene, vinylidene fluoride, vinyl fluoride, trifluoromethyl trifluoroethylene and the like. Among these, the fluorine-containing monomer is preferably fluoroethylene, more preferably tetrafluoroethylene or chlorotrifluoroethylene, from a point that a printed matter exhibiting excellent weather resistance can be obtained from an ink comprising a copolymer with a vinyl monomer and explained later.

Examples of the vinyl monomer include nonionic monoethylenic unsaturated monomers and bi-functional vinyl monomers. Examples of the nonionic monoethylenic unsaturated monomers include styrene, vinyltoluene, ethylene, vinyl acetate, vinyl chloride, vinylidene chloride, acrylonitrile, (meth)acrylamide, (meth)acrylic esters and the like. Examples of the (meth)acrylic esters include methyl acrylate, methyl methacrylate, ethyl (meth)acrylate, butyl (meth)acrylate, 2-hydroxyethyl (meth)acrylate, 2-ethylhexyl (meth)acrylate, benzyl (meth)acrylate, lauryl (meth)acrylate, oleyl (meth)acrylate, palmityl (meth)acrylate, stearyl (meth)acrylate and the like. Examples of the bi-functional vinyl monomers include divinylbenzene, allyl methacrylate, ethyleneglycol dimethacrylate, 1,3-butanediol dimethacrylate, diethylene glycol dimethacrylate, trimethylolpropane trimethacrylate and the like.

Examples of the vinyl ethers include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether and trimethylolpropane trivinyl ether, monovinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenylether-o-propylene carbonate, dodecyl vinyl ether, diethylene glycol monovinyl ether and octadecyl vinyl ether and the like.

A copolymerization ratio of the fluorine-containing monomer to the vinyl monomer is not limited particularly. Example of the copolymerization ratio is the fluorine-containing monomer : the vinyl monomer = 3 to 1 : 1 to 2 (weight ratio). When the copolymerization ratio is within such a range, printed matters obtained by using an ink comprising such a fluorine resin is apt to exhibit excellent weather resistance. It is noted that a polymerization method is not limited particularly. Examples of the polymerization method include solution polymerization, suspension polymerization, bulk polymerization, emulsion polymerization and the like.

The obtained fluorine resin may be any of an alternating copolymer, a block copolymer, a random copolymer and a graft copolymer. Among these, the fluorine resin is preferably an alternating copolymer of fluoroethylene and a vinyl monomer. According to the ink comprising such a fluorine resin, a printed matter having further excellent weather resistance is obtained easily. For that reason, the ink can form a printed matter exhibiting a desired color for an extended period of time. In the present embodiment, it is noted that the "alternating copolymer" means a copolymer comprising a much higher amount of a bond of a fluoroethylene unit and a vinyl monomer unit than a bond of a fluoroethylene unit and a fluoroethylene unit and a bond of a vinyl monomer unit and a vinyl monomer unit. Specifically, it is preferable that the alternating copolymer of the present embodiment comprises 90 to 100 mole % of the bond of a fluoroethylene unit and a vinyl monomer unit. In the present embodiment, it is noted that the alternating copolymer may comprise a small number of random bonding portions and block bonding portions. The above-mentioned bonds can be discriminated by, for example, ¹H-NMR measurement and ²⁹Si-NMR measurement. Further, for a method of analyzing alternating copolymerizability, for example, Journal of Applied Polymer Science, Vol. 106, 1007-1013 (2007) can be referred to.

A hydroxyl value of the fluorine resin of the present embodiment is preferably 20 mg KOH/g or more, more preferably 30 mg KOH/g or more. The hydroxyl value is preferably 100 mg KOH/g or less, more preferably 80 mg KOH/g or less. When the hydroxyl value is within the above-mentioned range, the obtained ink is excellent in curability, and stability in discharging at the time of inkjet printing is more excellent. In the case of the hydroxyl value being less than 20 mg KOH/g, when blending a curing agent explained later is blended, there is a tendency that the fluorine resin hardly reacts with the curing agent. Meanwhile, when the hydroxyl value is more than 100 mg KOH/g, there is a tendency that a dispersion system of the obtained ink easily becomes unstable and stability in discharging easily deteriorates. In the present embodiment, it is noted that the hydroxyl value is the number of milligrams (mg) of potassium hydroxide required for neutralizing acetic acid bonded to a hydroxyl group when 1 g of a sample (a solid content of a resin) was acetylated, and is measured by a method in accordance with JIS K 0070.

An acid value of the fluorine resin is preferably 5 mg KOH/g or less, more preferably 4 mg KOH/g or less. When the acid value is within the above-mentioned range, stability in discharging at the time of inkjet printing is more excellent. When the acid value is 5 mg KOH/g or less, a dispersion system of the obtained ink easily becomes stable and stability in discharging is excellent. Meanwhile, when the acid value is more than 5 mg KOH/g, there is a tendency that a dispersion system of the obtained ink easily becomes unstable and stability in discharging easily deteriorates. In the present embodiment, it is noted that the hydroxyl value shows a mass (mg) of potassium hydroxide required for neutralizing an acidic constituent contained in 1 g of a sample (a solid content of a resin) and is measured by a method in accordance with JIS K 0070.

It is preferable that the fluorine resin in the present embodiment is soluble in a solvent. The fluorine resin being soluble in a solvent exhibits more excellent solubility for a solvent having a solubility parameter value (SP vale) of 7 to 11 and described later. Specifically the solubility of the fluorine resin based on a solid content thereof in diethylene glycol diethyl ether is preferably not less than 500 (g/L), more preferably not less than 1,000 (g/L). When the solubility of the fluorine resin in a glycol ether solvent is within the above-mentioned range, re-precipitation of the fluorine resin in the obtained ink hardly occurs for a long period of time, and stability in discharging at the time of inkjet printing is more excellent.

Further, the solubility of the fluorine resin in the present embodiment in water based on a solid content thereof is preferably not more than 50 (g/L), more preferably not more than 30 (g/L). Accordingly, a printed matter obtained by using such an ink has good water resistance and excellent weather resistance. Meanwhile, when the solubility in water is more than 50 (g/L), water resistance of a printed matter obtained by using such an ink tends to deteriorate.

The fluorine resin of the present embodiment may be used in a state of being dispersed or dissolved in a predetermined solvent or may be used in a solventless state of containing no solvent (namely in a solid or semi-solid state). However, in the case of the fluorine resin in a state of being dispersed or dissolved in a solvent, when an obtained ink comprises it, a head may be damaged at the time of inkjet printing depending on kind of a solvent. Therefore, it is preferable that the fluorine resin of the present embodiment does not comprise a solvent having no suitability for a head, and a solventless state is more preferable. Such a solventless fluorine resin does not comprise a solvent being poor in suitability for a head, and therefore, at the time of inkjet printing, a head of an inkjet recording apparatus is hardly damaged.

A weight-average molecular weight (Mw) of the fluorine resin is not limited particularly. Example of Mw is preferably not less than 5,000, more preferably not less than 8,000. Mw is preferably not more than 50,000, more preferably not more than 40,000. When Mw is within the above-mentioned range, the fluorine resin is easily dissolved in a solvent. An obtained ink has improved drying characteristics, and is excellent in stability in discharging at the time of inkjet printing. Further, an obtained printed matter has less tackiness on a surface of an image, and when printed matters are overlapped, anti-blocking property is excellent. When the Mw is less than 5,000, there is a tendency that tackiness easily arises on an obtained printed matter and anti-blocking property is deteriorated. Meanwhile, when the Mw is more than 50,000, there is a tendency that solubility of the fluorine resin decreases and stability in discharging of an ink at the time of inkjet printing deteriorates. It is noted that in the present embodiment, the Mw is a value measured by GPC (gel permeation chromatography) and can be measured using a high speed GPC device (HLC-8120GPC manufactured by TOSO CORPORATION).

A content of the fluorine resin is not limited particularly. Example of the content of the fluorine resin based on a solid content thereof is preferably not less than 2% by mass, more preferably not less than 5% by mass in an ink. Further, the content of the fluorine resin is preferably not more than 40% by mass, more preferably not more than 30% by mass in an ink. When the content of the fluorine resin is not less than 2% by mass, stability in discharging at the time of inkjet printing tends to be excellent. Meanwhile, when the content of the fluorine resin is more than 40% by mass, there is a tendency that a viscosity of the ink becomes high and stability in discharging at the time of inkjet printing deteriorates.

### (Solvent)

The solvent is a liquid component for dissolving the above-mentioned fluorine resin in an ink. The solvent of the present embodiment has a solubility parameter value (SP value) of not less than 7, preferably not less than 7.5, more preferably not less than 8. Further, the SP value of the solvent is not more than 11, preferably not more than 10.5. When the SP value is within the above-mentioned range, the solvent easily dissolve the curing agent in the case where the ink comprises the fluorine resin and the curing agent explained later. Further, such a solvent hardly damage a head of an inkjet recording apparatus at the time of inkjet printing. It is noted that the SP value is defined as a square root of a cohesive energy density. In the present embodiment, the SP value can be calculated by Fedors estimation method from a molecular structure.

Examples of a solvent having the above-mentioned SP value include glycol ether solvents, acetate solvents, alcohol solvents, ketone solvents, ester solvents, hydrocarbon solvents, fatty acid ester solvents, aromatic solvents and the like. These may be used in combination. It is preferable that the solvent of the present embodiment comprises at least either of the glycol ether solvent or the acetate solvent. Both of the glycol ether solvent and the acetate solvent have a low viscosity and a relatively high boiling point. Therefore, an ink comprising those solvents has improved drying characteristics and more excellent stability in discharging at the time of inkjet printing.

Examples of the glycol ether solvents include ethylene glycol monomethyl ether, ethylene glycol monoethyl ether, ethylene glycol mono(iso)propyl ether, ethylene glycol monobutyl ether, diethylene glycol monoethyl ether, diethylene glycol mono-n-butyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, triethylene glycol monomethyl ether, triethylene glycol monoethyl ether, triethylene glycol mono-n-propyl ether, triethylene glycol mono-n-butyl ether, tripropylene glycol monoethyl ether, tripropylene glycol mono-n-propyl ether, tripropylene glycol mono-n-butyl ether, diethylene glycol dimethyl ether, triethylene glycol dimethyl ether, tetraethylene glycol dimethyl ether, polyethylene glycol dimethyl ether, diethylene glycol diethyl ether, diethylene glycol dibutyl ether, diethylene glycol ethyl methyl ether, diethylene glycol isopropyl methyl ether, diethylene glycol butyl methyl ether, triethylene glycol butyl methyl ether, dipropylene glycol dimethyl ether, tripropylene glycol dimethyl ether, propylene glycol monophenyl ether, ethylene glycol monobenzyl ether and the like.

Examples of the acetate solvents include alkylene glycol monoalkyl ether acetates such as ethylene glycol monomethyl ether acetate, ethylene glycol monoethyl ether acetate, ethylene glycol monopropyl ether acetate, ethylene glycol monoisopropyl ether acetate, ethylene glycol mono-n-butyl ether acetate, ethylene glycol mono-sec-butyl ether acetate, ethylene glycol monoisobutyl ether acetate, ethylene glycol mono-tert-butyl ether acetate, propylene glycol monomethyl ether acetate, propylene glycol monoethyl ether acetate, propylene glycol monoisopropyl ether acetate, propylene glycol monopropyl ether acetate, propylene glycol mono-n-butyl ether acetate, propylene glycol mono-sec-butyl ether acetate, propylene glycol monoisobutyl ether acetate, propylene glycol mono-tert-butyl ether acetate, 3-methyl-3-methoxybutyl acetate, 3-methyl-3-ethoxybutyl acetate, 3-methyl-3-propoxybutyl acetate, 3-methyl-3-isopropoxybutyl acetate, 3-methyl-3-n-butoxyethyl acetate, 3-methyl-3-isobutoxybutyl acetate, 3-methyl-3-sec-butoxybutyl acetate and 3-methyl-3-tert-butoxybutyl acetate, ethylene glycol diacetate, diethylene glycol diacetate, triethylene glycol diacetate, propylene glycol diacetate, dipropylene glycol diacetate, tripropylene glycol diacetate, dipropylene glycol methyl ether acetate, 1,6-hexanediol diacetate and the like.

It is preferable that a boiling point of the solvent of the present embodiment is preferably 150°C or higher, more preferably 180°C or higher. Further, the boiling point of the solvent is preferably 300°C or lower, more preferably 280°C or lower. When the boiling point is within the above-mentioned range, an obtained ink has further improved drying characteristics, and is more excellent in stability in discharging at the time of inkjet printing. Further, according to such an ink, a vivid image with less ink staining is formed easily. When the boiling point of the solvent is lower than 150°C, there is a tendency that the ink is easily dried around a head nozzle and stability in discharging is deteriorated. Meanwhile, when the boiling point of the solvent is more than 300°C, the ink is hardly dried and it takes a time for a drying step when forming a printed matter. Also, an image of the printed matter is easily stained with the ink.

It is noted that other solvents having an SP value out of the above-mentioned range may be contained as a solvent of the present embodiment within a range so as not to impair physical properties of the ink. Examples of such other solvents include water, an alcohol solvent, a ketone solvent, an ester solvent, a hydrocarbon solvent, a fatty acid ester solvent, an aromatic solvent and the like.

A content of the solvent is not limited particularly. One example of the content of the solvent in the ink is preferably not less than 50% by mass, more preferably not less than 60% by mass. Further, the content of the solvent in the ink is preferably not more than 99% by mass, more preferably not more than 80% by mass. When the content of the solvent is less than 50% by mass, there is a tendency that a viscosity of the ink becomes higher and stability in discharging at the time of inkjet printing is deteriorated. Meanwhile, when the content of the solvent is more than 99% by mass, there is a tendency that a proportion of the fluorine resin to be added in the ink becomes lower and desired characteristics are hardly obtained.

### (Optional components)

The ink of the present embodiment may comprise optional components adequately in addition to the above-mentioned fluorine resin and solvents. Examples of optional components include a curing agent, a curing catalyst, a pigment, an ultraviolet absorber, a light stabilizer and the like.

### Curing agent

A curing agent can be blended in order to cure an ink. The curing agent is not limited particularly. Examples of the curing agent include an isocyanate curing agent, a blocked isocyanate curing agent, an amine curing agent, an acid anhydride curing agent, a carbodiimide curing agent and the like. These curing agents may be used in combination. Among these, preferred is a curing agent comprising an isocyanate resin. Accordingly, a printed matter obtained by using such an ink has more excellent weather resistance.

An isocyanate resin may be a compound having two or more isocyanate groups in one molecule thereof, and any of general-purpose, less-yellowing and non-yellowing isocyanate resins can be used. Examples of general-purpose isocyanate resins include tolylene diisocyanate (TDI), isocyanurate, i.e. trimerized TDI, 4,4-diphenylmethane diisocyanate (MDI) and polymeric diphenylmethane diisocyanate (polymeric MDI). Examples of less-yellowing isocyanate resins include xylylenediamine (XDI) and the like. Examples of non-yellowing isocyanate resins include hexamethylene diisocyanate (HDI), isophorone diisocyanate (IPDI), hydrogenated XDI, hydrogenated MDI and the like. It is preferable that among these isocyanate resins, the curing agent comprises preferably non-yellowing blocked isocyanate, more preferably non-yellowing blocked isocyanate having an isocyanurates structure. The ink comprising such a curing agent is more excellent in curability. Further, by using such an ink, an obtained printed matter is further excellent in weather resistance. Accordingly, the printed matter exhibits a desired color for a long period of time.

When blending the curing agent, a content thereof varies with an adding amount, a hydroxyl value and an acid value of the fluorine resin, and therefore, is not determined unambiguously. One example of the content of the curing agent in the ink is preferably not less than 0.1% by mass, more preferably not less than 1% by mass. Further, the content of the curing agent in the ink is preferably not more than 20% by mass, more preferably not more than 10% by mass. When the content of the curing agent is less than 0.1% by mass, there is a tendency that the curing agent cannot react with the fluorine resin, and desired performance cannot be obtained. Meanwhile, when the content of the curing agent is more than 20% by mass, there is a tendency that there is a fear of excessive addition of the curing agent for the fluorine resin, and weather resistance of an obtained printed matter deteriorates.

### Curing catalyst

Examples of the curing catalyst include organic acid salt, alcoholate or a chelate compound of metal such as tin, titanium, zirconium, iron, antimony, bismuth, manganese, zinc or aluminum; amine such as hexylamine or dodecylamine; amine salts such as acetic hexylamine or dodecylamine phosphate; quaternary ammonium salt such as benzyltrimethylammonium acetate; alkali metal salt such as potassium acetate and the like. More specifically there are exemplified organobismuth compounds such as bismuth octylate and bismuth neodecanoate; organotin compounds such as dibutyltin dilaurate, dibutyltin dioctylate, dimethyltin dineodecanoate and stannous octoate; and organotitanium compounds such as tetrabutyl titanate, tetraisopropyl titanate, diisopropoxybis(acetylacetonate) titanium and diisopropoxybis(ethylacetoacetate) titanium. These may be used in combination. In the present embodiment, the curing catalyst is preferably tin compounds, more preferably dialkyltin compounds such as dibutyltin dilaurate and dimethyltin dineodecanoate, further preferably dibutyltin dilaurate. When the ink comprises dibutyltin dilaurate as the curing catalyst, an obtained ink is excellent in curability. Further, the obtained ink has improved drying characteristics and excellent stability in discharging at the time of inkjet printing.

When the ink comprises a curing catalyst, a content thereof is not limited particularly. One example of the content of the curing catalyst in the ink is preferably not less than 0.001% by mass, more preferably not less than 0.01% by mass. Further, the content of the curing catalyst in the ink is preferably not more than 5% by mass, more preferably not more than 3% by mass. When the content of the curing catalyst is less than 0.001% by mass, performance of a curing catalyst tends not to be exhibited sufficiently. Meanwhile, when the content of the curing catalyst is more than 5% by mass, there is a tendency that curability of the ink becomes high and stability in discharging at the time of inkjet printing deteriorates.

### Pigment

Various inorganic pigments or organic pigments can be blended in the ink as a pigment. Examples of inorganic pigments include oxides, complex oxides, hydroxides, sulfides, ferrocyanides, chromates, carbonates, silicates, phosphates, carbons (carbon black), metallic flakes and the like. Examples of organic pigments include nitroso pigments, lake pigments, azo lake pigments, insoluble azo pigments, monoazo pigments, disazo pigments, disazo condensation pigments, benzimidazolone pigments, phthalocyanine pigments, anthraquinone pigments, perylene pigments, quinacridone pigments, dioxazine pigments, isoindolinone pigments, azomethine pigments, pyrrolo-pyrrole pigments and the like. These pigments may be used in combination.

When the ink comprises the pigment, a content thereof is not limited particularly. One example of the content of the pigment in the ink is preferably not less than 0.01% by mass, more preferably not less than 0.1% by mass. Further, the content of the pigment in the ink is preferably not more than 30% by mass, more preferably not more than 20% by mass. When the content of the pigment is less than 0.01% by mass, sufficient coloring tends not to be provided. Meanwhile, when the content of the pigment is more than 30% by mass, there is a tendency that a viscosity of the ink becomes high and stability in discharging at the time of inkjet printing deteriorates.

### Ultraviolet absorber

The ultraviolet absorber is blended suitably for enhancing weather resistance of a printed matter obtained by using the ink of the present embodiment. As a result, the printed matter can exhibit a desired color for a longer period of time.

Examples of the ultraviolet absorber include benzotriazole ultraviolet absorbers, benzophenone ultraviolet absorbers, triazine derivatives, salicylic acid derivatives and the like. Examples of the benzotriazole ultraviolet absorbers include

2-(2'-hydroxy-5'-methylphenyl)benzotriazole,
2-(2'-hydroxy-5'-tert-butylphenyl)benzotriazole,
2-(2'-hydroxy-5'-tert-butylphenyl)-5-chlorobenzotriazole,
2-(2'-hydroxy-3',5'-di-tert-butylphenyl)benzotriazole,
2-(2'-hydroxy-3'-tert-butyl-5'-methylphenyl)-5-chlorobenzotriazole,
2-(2'-hydroxy-3',5'-di-tert-butylphenyl)-5-chlorobenzotriazole,
2-(2'-hydroxy-3',5'-di-tert-amylphenyl)benzotriazole,
2-(2'-hydroxy-4'-octylphenyl)benzotriazole,
2-(2'-hydroxy-5'-methacryloxyethylphenyl)-2H-benzotriazole,
2-{(2'-hydroxy-3',3",4",5",6"-tetrahydrophthalimidemethyl)-5'-methylphenyl}benzotriazole and the like. Examples of the benzophenone ultraviolet absorbers include 2-hydroxybenzophenone, 5-chloro-2-hydroxybenzophenone, 2,4-dihydroxybenzophenone,
2-hydroxy-4-methoxybenzophenone,
2-hydroxy-4-octyloxybenzophenone,
2-hydroxy-4-dodecyloxybenzophenone,
2-hydroxy-4-octadecyloxybenzophenone,
2,2'-dihydroxy-4-methoxybenzophenone,
2,2'-dihydroxy-4,4'-dimethoxybenzophenone,
2-hydroxy-4-methoxy-5-sulfobenzophenone and the like. Examples of the triazine derivatives include
2-[4-{(2-hydroxy-3-dodecyloxy-propyl)oxy}-2-hydroxyphenyl]-4,6-bis(2, 4-dimethylphenyl)-1,3,5-triazine,
2-[4-{(2-hydroxy-3-tridecyloxy-propyl)oxy}-2-hydroxyphenyl]-4,6-bis(2, 4-dimethylphenyl)-1,3,5-triazine,
2-{4-(octyl-2-methylethanoate)oxy-2-hydroxyphenyl-4,6-{bis(2,4-dimet
hylphenyl)}-1,3,5-triazine (brand name Tinuvin 479 available from BASF Japan),
tris[2,4,6-[2-{4-(octyl-2-methylethanoate)oxy-2-hydroxyphenyl}]]-1,3,5-triazine and the like. Examples of the salicylic acid derivatives include phenylsalicylate, p-tert-butylphenylsalicylate, p-octylphenylsalicylate, p-(1,1,3,3-tetramethylbutyl)phenylsalicylate and the like. These ultraviolet absorbers may be used in combination. Among these, the ultraviolet absorber is preferably 2-{4-(octyl-2-methylethanoate)oxy-2-hydroxyphenyl-4,6-{bis(2,4-dimet hylphenyl)}-1,3,5-triazine from a point that it shows excellent ultraviolet absorption ability.

When the ink comprises an ultraviolet absorber, a content thereof is not limited particularly. One example of the content of the ultraviolet absorber in the ink is preferably not less than 0.01% by mass, more preferably not less than 0.1% by mass. Further, the content of the ultraviolet absorber in the ink is preferably not more than 10% by mass, more preferably not more than 5% by mass. When the content of the ultraviolet absorber is less than 0.01% by mass, performance of the ultraviolet absorber tends not to be exhibited sufficiently. Meanwhile, when the content of the ultraviolet absorber is more than 10% by mass, there is a tendency that further effect cannot be obtained and yet cost of the ink becomes high.

### Light stabilizer

The light stabilizer is blended suitably for enhancing weather resistance of a printed matter obtained by using the ink of the present embodiment. As a result, the printed matter can exhibit a desired color for a longer period of time.

Examples of the light stabilizer include hindered amine light stabilizers. Examples of the hindered amine light stabilizers include
2,2,6,6-tetramethyl-4-piperidylstearate,
1,2,2,6,6-pentamethyl-4-piperidylstearate,
2,2,6,6-tetramethyl-4-piperidylbenzoate,
bis(2,2,6,6-tetramethyl-4-piperidyl)se bacate,
bis(1,2,2,6,6-pentamethyl-4-piperidyl)sebacate,
bis(1-undecyloxy-2,2,6,6-tetramethyl-4-piperidyl)carbonate,
tetrakis(2,2,6,6-tetramethyl-4-piperidylbutanetetracarboxylate,
tetrakis(1,2,2,6,6-pentamethyl-4-piperidylbutanetetracarboxylate,
bis(2,2,6,6-tetramethyl-4-piperidyl)-di(tridecyl)-1,2,3,4-butanetetracarboxylate,
bis(1,2,2,6,6-pentamethyl-4-piperidyl)·di(tridecyl)-1,2,3,4-butanetetracarboxylate,
bis(1,2,2,6,6-pentamethyl-4-piperidyl)-2-butyl-2-(3,5-ditertbutyl-4-hydroxybenzyl)malonate,
1-(2-hydroxyethyl)-2,2,6,6-tetramethyl-4-piperidinol/diethyl succinate condensation polymer,
1,6-bis(2,2,6,6-tetramethyl-4-piperidylamino)hexane/dibromoethane condensation polymer,
1,6-bis(2,2,6,6-tetramethyl-4-piperidylamino)hexane/2,4-dichloro-6-morphorino-s-triazine condensation polymer,
1,6-bis(2,2,6,6-tetramethyl-4-piperidylamino)hexane/2,4-dichloro-6-tertoctylamino-s-triazine condensation polymer,
1,5,8,12-tetrakis[2,4-bis(N-butyl-N-(2,2,6,6-tetramethyl-4-piperidyl)amino)-s-triazine-6-yl]-1,5,8,12-tetraazadodecane,
1,5,8,12-tetrakis[2,4-bis(N-butyl-N-(1,2,2,6,6-pentamethyl-4-piperidyl) amino)-s-triazine-6-yl]-1,5,8,12-tetraazadodecane,
1,6,11-tris[2,4-bis(N-butyl-N-(2,2,6,6-tetramethyl-4-piperidyl)amino)-s-triazine-6-ylaminoundecane,
1,6,11-tris[2,4-bis(N-butyl-N-(1,2,2,6,6-pentamethyl-4-piperidyl)amino) -s-triazine-6-ylaminoundecane,
bis(1-octyloxy-2,2,6,6-tetramethyl-4-piperidyl)-decanedioate and the like. These light stabilizers may be used in combination. Among these, the light stabilizer is preferably bis(1-octyloxy-2,2,6,6-tetramethyl-4-piperidyl)-decanedioate from a point that it is in a liquid form and is stable without reacting with other materials.

When the ink comprises a light stabilizer, a content thereof is not limited particularly. One example of the content of the light stabilizer in the ink is preferably not less than 0.01% by mass, more preferably not less than 0.1% by mass. Further, the content of the light stabilizer in the ink is preferably not more than 10% by mass, more preferably not more than 5% by mass. When the content of the light stabilizer is less than 0.01% by mass, performance of the light stabilizer tends not to be exhibited sufficiently. Meanwhile, when the content of the light stabilizer is more than 10% by mass, there is a tendency that further effect cannot be obtained and yet cost of the ink becomes high.

In the present embodiment, it is preferable that the ink comprises at least either one of the above-mentioned ultraviolet absorber or light stabilizer. Accordingly, weather resistance of a printed matter obtained by using the ink of the present embodiment is further excellent. As a result, the printed matter can exhibit a desired color for a longer period of time.

Referring to the overall explanation of the ink, a viscosity of the ink is not limited particularly. The viscosity of the ink at 30°C is preferably not less than 5 mPa·s, more preferably not less than 6 mPa·s. Further, the viscosity of the ink at 30°C is preferably not more than 30 mPa·s, more preferably not more than 20 mPa·s. When the viscosity is within the above-mentioned range, the ink has excellent stability in discharging. When the viscosity is less than 5 mPa·s, stability in discharging at the time of inkjet printing tends to deteriorate. Meanwhile, when the viscosity is more than 30 mPa·s, there is a tendency that the ink cannot be ejected successfully from a head nozzle and stability in discharging at the time of inkjet printing deteriorates. It is noted that of the present embodiment, the viscosity can be measured using a Brookfield type viscometer (TVB-20LT manufactured by TOKI SNGYO CO., LTD.).

It is noted that a method of adjusting the viscosity to be within the above-mentioned range is not limited particularly. One example of the method is such that the viscosity can be adjusted depending on an amount of the fluorine resin and kind and an amount of the solvent to be used. The viscosity may be adjusted using a viscosity modifier such as a thickener according to necessity.

A surface tension of the ink is not limited particularly. The surface tension of the ink at 25°C is preferably not less than 20 dyne/cm, more preferably not less than 22 dyne/cm. Further, the surface tension of the ink at 25°C is preferably not more than 40 dyne/cm, more preferably not more than 38 dyne/cm. When the surface tension is within the above-mentioned range, the ink has excellent stability in discharging. When the surface tension is less than 20 dyne/cm, there is a tendency that wettability of the ink becomes too high, thereby causing ink staining easily. Meanwhile, when the surface tension is more than 40 dyne/cm, there is a tendency that a surface of a substrate sheds the ink easily and an obtained printed matter becomes unclear. It is noted that in the present embodiment, the surface tension can be measured using a static surface tension meter (plate method) (CBVP-A3 manufactured by Kyowa Interface Science Co., Ltd.).

It is noted that a method of adjusting the surface tension to be within the above-mentioned range is not limited particularly. One example of the method is such that the surface tension can be adjusted by adding an acrylic surface modifier, a silicone surface modifier, a fluorine-containing surface modifier or the like to the ink.

As mentioned above, the ink of the present embodiment comprises the fluorine resin, thereby allowing weather resistance of the obtained printed matter to be enhanced. Further, the ink comprises the solvent having the SP value of 7 to 11, thereby enabling the fluorine resin to be dissolved therein. Therefore, the ink can form a printed matter having a desired color for a long period of time. Furthermore, the ink has improved drying characteristics, and stability in discharging at the time of inkjet printing is excellent. Also, since the ink uses the solvent having the above-mentioned SP value, a head of an inkjet recording apparatus is hardly damaged.

### <Method for producing a printed matter>

The method for producing a printed matter according to one embodiment of the present invention mainly comprises a step of applying the above-mentioned ink to a substrate by an inkjet method using an inkjet recording apparatus and a step of heat-treating the applied ink. As a result of the heat-treatment, an inkjet printed matter having an image formed thereon is provided.

A method of applying an ink to a substrate by an inkjet recording method is not limited particularly. Examples of such method include continuous types such as a charge modulation type, a micro-dot type, a charge injection control type and an ink mist type; on-demand types such as a piezo type, a pulse jet type, a Bubble Jet (registered trademark) type and an electrostatic suction type; and the like.

According to the method for producing a printed matter of the present embodiment, the ink comprising the solvent having the above-mentioned SP value is used. Therefore, in the present embodiment, a head of an inkjet recording apparatus is hardly damaged at the time of inkjet printing.

A substrate, to which the ink is applied, is not limited particularly. Examples of the substrate include metal sheets such as a steel sheet, an aluminum sheet and a stainless steel sheet; plastic sheets or films such as acrylic, polycarbonate, ABS, polypropylene, polyester and vinyl chloride sheets or films; ceramic sheet, concrete, wood, glass and the like. Further, the substrate may be fabrics made of polyester fibers such as a cationic-dyeable polyester (CDP) fiber, a polyethylene terephthalate (PET) fiber, a polybutylene terephthalate (PBT) fiber, a polytrimethylene terephthalate (PTT) fiber, a wholly aromatic polyester fiber and a polylactic acid fiber, an acetate fiber, a triacetate fiber, a polyurethane fiber, a nylon fiber and a complex fiber thereof. These can be selected appropriately depending on applications. In the case of the substrate being a fabric, it is preferable that the fabric is subjected to treatment with a pretreatment agent before printing. Examples of the pretreatment agent include a water-soluble polymer, a non-water-soluble inactive organic compound, a flame retardant, an ultraviolet absorber, an anti-reducing agent, an antioxidant, a pH regulator, hydrotropes, an anti-foaming agent, a penetrating agent, a microporous-forming agent and the like. Examples of a method of applying these pretreatment agents to a fabric include a pad dyeing method, a spraying method, a dipping method, a coating method, a laminating method, a gravure coating method, an inkjet printing method and the like.

The substrate subjected to application of an ink is then dried. A drying condition is not limited particularly. One example of the drying condition is heat treatment which can be conducted at 50 to 250°C for 1 to 60 minutes. By the drying, a solvent in the ink can be removed. In order to prevent ink staining, it is preferable to conduct drying simultaneously with or immediately after application of the ink to the substrate.

An obtained printed matter is excellent in weather resistance since the above-mentioned ink is used. Therefore, the printed matter can show a desired color for a long period of time. Further, the ink has improved drying characteristics since the above-mentioned solvent is used. Therefore, the method for producing a printed matter of the present embodiment is excellent in stability in discharging at the time of inkjet printing.

One embodiment of the present invention is as mentioned above. The present invention is not limited to the above-mentioned embodiment. The above-mentioned embodiment is one embodiment of the invention having the following configurations.

(1) An ink comprising a fluorine resin and a solvent having a solubility parameter value (SP vale) of 7 to 11, wherein the fluorine resin having a solubility of 500 (g/L) or more in diethylene glycol diethyl ether and a hydroxyl value of 20 to 100 mg KOH/g, wherein the fluorine resin is contained in the ink in an amount of 40% by mass or less, wherein an amount of the solvent in the ink is 50% by mass or more, wherein the solvent comprises at least one glycol ether solvent selected from the group consisting of diethylene glycol diethyl ether, diethylene glycol dimethyl ether, diethylene glycol isopropyl methyl ether, tripropylene glycol dimethyl ether, diethylene glycol butyl methyl ether, propylene glycol monophenyl ether, tetraethylene glycol dimethyl ether, propylene glycol monomethyl ether and ethylene glycol monobenzyl ether, or at least one acetate solvent selected from the group consisting of propylene glycol diacetate, dipropylene glycol methyl ether acetate and 1,6-hexanediol diacetate, and wherein the ink is applied to a substrate by an inkjet printing method.
(2) The ink of above (1), wherein a resin component consists of the fluorine resin.
(3) The ink of above (1) or (2), wherein a boiling point of the solvent is 150 to 300°C.
(4) The ink of any one of above (1) to (3), wherein a weight-average molecular weight of the fluorine resin is from 5,000 to 50,000.
(5) The ink of any one of above (1) to (4), where the fluorine resin is a copolymer of fluoroethylene and a vinyl monomer.
(6) The ink of any one of above (1) to (5), wherein the fluorine resin is contained in the ink in an amount of 5 to 40% by mass.
(7) The ink of any one of above (1) to (6), wherein an acid value of the fluorine resin is 5 mg KOH/g or less.
(8) The ink of any one of above (1) to (7), wherein the fluorine resin is in a solid state containing no solvent and is soluble in the solvent.
(9) The ink of any one of above (1) to (8), wherein solubility of the fluorine resin in water is 50 (g/L) or less.
(10) The ink of any one of above (1) to (9), wherein the fluorine resin is an alternating copolymer of fluoroethylene and a vinyl monomer.
(11) The ink of any one of above (1) to (10), comprising a non-yellowing blocked isocyanate.
(12) The ink of above (11), wherein the non-yellowing blocked isocyanate has an isocyanurate structure.
(13) The ink of any one of above (1) to (12), comprising at least either of an ultraviolet absorber or a light stabilizer.
(14) The ink of any one of above (1) to (13), comprising dibutyltin dilaurate.
(15) A method for producing a printed matter, the method comprising a step of applying the ink of any one of above (1) to (14) to a substrate by an inkjet printing method.

### EXAMPLE

The present invention is then explained by means of Examples, but is not limited to the Examples.

Starting materials used are shown below.

### (Fluorine resin)

LF-200F: Alternating copolymer of ethylene trifluoride and a vinyl monomer manufactured by AGC INC., hydroxyl value: 50 mg KOH/g, acid value: 0 mg KOH/g, Mw: 20,000, solubility in diethylene glycol diethyl ether: 1,000 (g/L) or more, solubility in water: 6 (g/L), non-volatile matter content: 100%
LF-710F: Alternating copolymer of ethylene trifluoride and a vinyl monomer manufactured by AGC INC., hydroxyl value: 50 mg KOH/g, acid value: 0 mg KOH/g, Mw: 18,000, solubility in diethylene glycol diethyl ether: 1,000 (g/L) or more, solubility in water: 7 (g/L), non-volatile matter content: 100%
LF-916F: Alternating copolymer of ethylene trifluoride and a vinyl monomer manufactured by AGC INC., hydroxyl value: 100 mg KOH/g, acid value: 0 mg KOH/g, Mw: 10,000, solubility in diethylene glycol diethyl ether: 1,000 (g/L) or more, solubility in water: 10 (g/L), non-volatile matter content: 100%
LF-200: Alternating copolymer of ethylene trifluoride and a vinyl monomer manufactured by AGC INC., hydroxyl value: 50 mg KOH/g, acid value: 0 mg KOH/g, Mw: 20,000, solubility in diethylene glycol diethyl ether: 1,000 (g/L) or more, solubility in water: 6 (g/L), non-volatile matter content: 60% (40%: Xylene)
LF-800: Alternating copolymer of ethylene trifluoride and a vinyl monomer manufactured by AGC INC., hydroxyl value: 40 mg KOH/g, acid value: 2 mg KOH/g, Mw: 9,000, solubility in diethylene glycol diethyl ether: 1,000 (g/L) or more, solubility in water: 11 (g/L), non-volatile matter content: 60% (40%: mineral spirit)
LF-810: Alternating copolymer of ethylene trifluoride and a vinyl monomer manufactured by AGC INC., hydroxyl value: 10 mg KOH/g, acid value: 1 mg KOH/g, Mw: 30,000, solubility in diethylene glycol diethyl ether: 1,000 (g/L) or more, solubility in water: 4 (g/L), non-volatile matter content: 45% (55%: mineral spirit)
GK-510: Copolymer of ethylene tetrafluoride and a vinyl monomer manufactured by DAIKIN INDUSTRIES, LTD., hydroxyl value: 60 mg KOH/g, acid value: 11 mg KOH/g, Mw: 20,000, solubility in diethylene glycol diethyl ether: 1,000 (g/L) or more, solubility in water: 3 (g/L), non-volatile matter content: 50% (50%: butyl acetate)
GK-570: Copolymer of ethylene tetrafluoride and a vinyl monomer manufactured by DAIKIN INDUSTRIES, LTD., hydroxyl value: 60 mg KOH/g, acid value: 3 mg KOH/g, Mw: 12,000, solubility in diethylene glycol diethyl ether: 1,000 (g/L) or more, solubility in water: 5 (g/L), non-volatile matter content: 65% (35%: butyl acetate)
K-700: Copolymer of ethylene trifluoride and a vinyl monomer manufactured by DIC CORPORATION, hydroxyl value: 48 mg KOH/g, acid value: 0 mg KOH/g, Mw: 24,000, solubility in diethylene glycol diethyl ether: 1,000 (g/L) or more, solubility in water: 5 (g/L), non-volatile matter content: 50% (50%: toluene/butyl acetate)
FE-4300: Alternating copolymer of ethylene trifluoride and a vinyl monomer manufactured by AGC INC., hydroxyl value: 10 mg KOH/g, acid value: 0 mg KOH/g, Mw: 20,000, an aqueous dispersion of an alternating copolymer of ethylene trifluoride and a vinyl monomer, non-volatile matter content: 50% (50%: water)

### (Solvent)

DEDG: Diethylene glycol diethyl ether, a glycol ether solvent, boiling point: 189°C, SP value: 8.6, manufactured by Nippon Nyukazai Co., Ltd.
DMDG: Diethylene glycol dimethyl ether, a glycol ether solvent, boiling point: 162°C, SP value: 8.6, manufactured by Nippon Nyukazai Co., Ltd.
PhFG: Propylene glycol monophenyl ether, a glycol ether solvent, boiling point: 243°C, SP value: 10.5, manufactured by Nippon Nyukazai Co., Ltd.
MTEM: Tetraethylene glycol dimethyl ether, a glycol ether solvent, boiling point: 275°C, SP value: 8.9, manufactured by TOHO CHEMICAL INDUSTRY CO., LTD.
DPMA: Dipropylene glycol methyl ether acetate, an acetate solvent, boiling point: 213°C, SP value: 8.7, manufactured by DAICEL CORPORATION.
1,6-HDDA: 1,6-Hexanediol diacetate, an acetate solvent, boiling point: 260°C, SP value: 9.5, manufactured by DAICEL CORPORATION.
MFG: Propylene glycol monomethyl ether, a glycol ether solvent, boiling point: 121°C, SP value: 10.4, manufactured by Nippon Nyukazai Co., Ltd.
BzDG: Ethylene glycol monobenzyl ether, a glycol ether solvent, boiling point: 302°C, SP value: 9.6, manufactured by Nippon Nyukazai Co., Ltd.
IPDM: Diethylene glycol isopropyl methyl ether, a glycol ether solvent, boiling point: 179°C, SP value: 7.4, manufactured by TOHO CHEMICAL INDUSTRY CO., LTD.
MTPOM: Tripropylene glycol dimethyl ether, a glycol ether solvent, boiling point: 215°C, SP value: 7.1, manufactured by TOHO CHEMICAL INDUSTRY CO., LTD.
BDM: Diethylene glycol butyl methyl ether, a glycol ether solvent, boiling point: 212°C, SP value: 7.8, manufactured by TOHO CHEMICAL INDUSTRY CO., LTD.
PGDA: Propylene glycol diacetate, an acetate solvent, boiling point: 190°C, SP value: 9.6, manufactured by Daicel Chemical Industries, Ltd.
IPA: Isopropyl alcohol, an alcohol solvent, boiling point: 82°C, SP value: 11.9
Ethylene glycol: An alcohol solvent, boiling point: 197°C, SP value: 14.2
EXCEPARL HO: A fatty acid ester solvent, boiling point: 300°C or higher, SP value: 16.7, manufactured by KAO CORPORATION
EXCEPARL M-OL: A fatty acid ester solvent, boiling point: 100°C, SP value: 23.4, manufactured by KAO CORPORATION
n-Octane: A hydrocarbon solvent, boiling point: 82°C, SP value: 11.9
Water: Boiling point: 100°C, SP value: 23.4
Butyl cellosolve: Ethylene glycol monobutyl ether, an ether solvent, boiling point: 171°C, SP value: 9.8, manufactured by Nippon Nyukazai Co., Ltd.

### (Curing agent)

X2252-2: Blocked isocyanate manufactured by Asahi Kasei Chemicals Corporation
X2252-3: Blocked isocyanate manufactured by Asahi Kasei Chemicals Corporation

### (Additive)

Tinuvin 123: HALS available from BASF Japan
Tinuvin 479: UVA available from BASF Japan

### (Catalyst)

Dibutyltin dilaurate: Metallic compound catalyst
Tetraethylene diamine: Amine catalyst

### <Preparation of dispersion>

A method of preparing a dispersion is shown below.

### (Dispersion Y)

A dispersion Y was prepared by mixing 50 parts by mass of a yellow pigment (TSY-1 manufactured by TODA KOGYO CORP.), 10 parts by mass of a dispersant (Solsperse 36000 available from Nippon Lubrizol Kabushiki Kaisha) and 40 parts by mass of MTEM (tetraethylene glycol dimethyl ether, a glycol ether solvent manufactured by TOHO CHEMICAL INDUSTRY CO., LTD.) with a mixer, and then filtrating a mixture.

### (Dispersion R)

A dispersion R was prepared by mixing 50 parts by mass of a red pigment (160ED manufactured by TODA KOGYO CORP.), 10 parts by mass of a dispersant (Solsperse 36000 available from Nippon Lubrizol Kabushiki Kaisha) and 40 parts by mass of MTEM (tetraethylene glycol dimethyl ether, a glycol ether solvent manufactured by TOHO CHEMICAL INDUSTRY CO., LTD.) with a mixer, and then filtrating a mixture.

### (Dispersion B)

A dispersion B was prepared by mixing 50 parts by mass of a blue pigment (DAIPYROXIDE Blue Sharp 9410 manufactured by Dainichiseika Color & Chemicals Mfg. Co., Ltd.), 10 parts by mass of a dispersant (Solsperse 36000 available from Nippon Lubrizol Kabushiki Kaisha) and 40 parts by mass of MTEM (tetraethylene glycol dimethyl ether, a glycol ether solvent manufactured by TOHO CHEMICAL INDUSTRY CO., LTD.) with a mixer, and then filtrating a mixture.

### (Dispersion Bk)

A dispersion Bk was prepared by mixing 20 parts by mass of a black pigment (NIPEX35 manufactured by ippon Lubrizol Kabushiki Kaisha), 10 parts by mass of a dispersant (Solsperse 36000 available from Nippon Lubrizol Kabushiki Kaisha) and 70 parts by mass of MTEM (tetraethylene glycol dimethyl ether, a glycol ether solvent manufactured by TOHO CHEMICAL INDUSTRY CO., LTD.) with a mixer, and then filtrating a mixture.

Methods of measuring physical properties are shown below.

### (Hydroxyl value)

A mass (mg) of potassium hydroxide required for neutralizing acetic acid bonded to a hydroxyl group when 1 g of a sample (a solid content of a resin) was acetylated in accordance with JIS K 0070 is used as a hydroxyl value of the sample.

### (Acid value)

A mass (mg) of potassium hydroxide required for neutralizing an acidic constituent contained in 1 g of a sample (a solid content of a resin) in accordance with JIS K 0070 is used as an acid value of the sample.

### (Mw)

Mw is a value measured by GPC (gel permeation chromatography), and in Example, was measured using a high speed GPC apparatus (HLC-8120GPC manufactured by TOSO CORPORATION).

### (Solubility in diethylene glycol diethyl ether)

A mass (g) of a sample (a solid content of a resin) which is dissolved in 1 liter of diethylene glycol diethyl ether without separation and white turbidity is assumed to be solubility of the sample in diethylene glycol diethyl ether.

### (Solubility in water)

A mass (g) of a sample (a solid content of a resin) which is dissolved in 1 liter of pure water without separation and white turbidity is assumed to be solubility of the sample in water.

### (Viscosity)

A viscosity was measured under the condition of 30°C using a Brookfield type viscometer (TVB-20LT manufactured by TOKI SANGYO CO., LTD.).

### (Examples 1 to 36 and Comparative Examples 1 to 8)

Inks were prepared in accordance with the formulations (unit: % by mass) shown in Tables 1 and 2. Inkjet printing was performed using the obtained inks under the following inkjet printing conditions. The obtained inkjet images were subjected to drying treatment under the following drying conditions to produce printed matters.

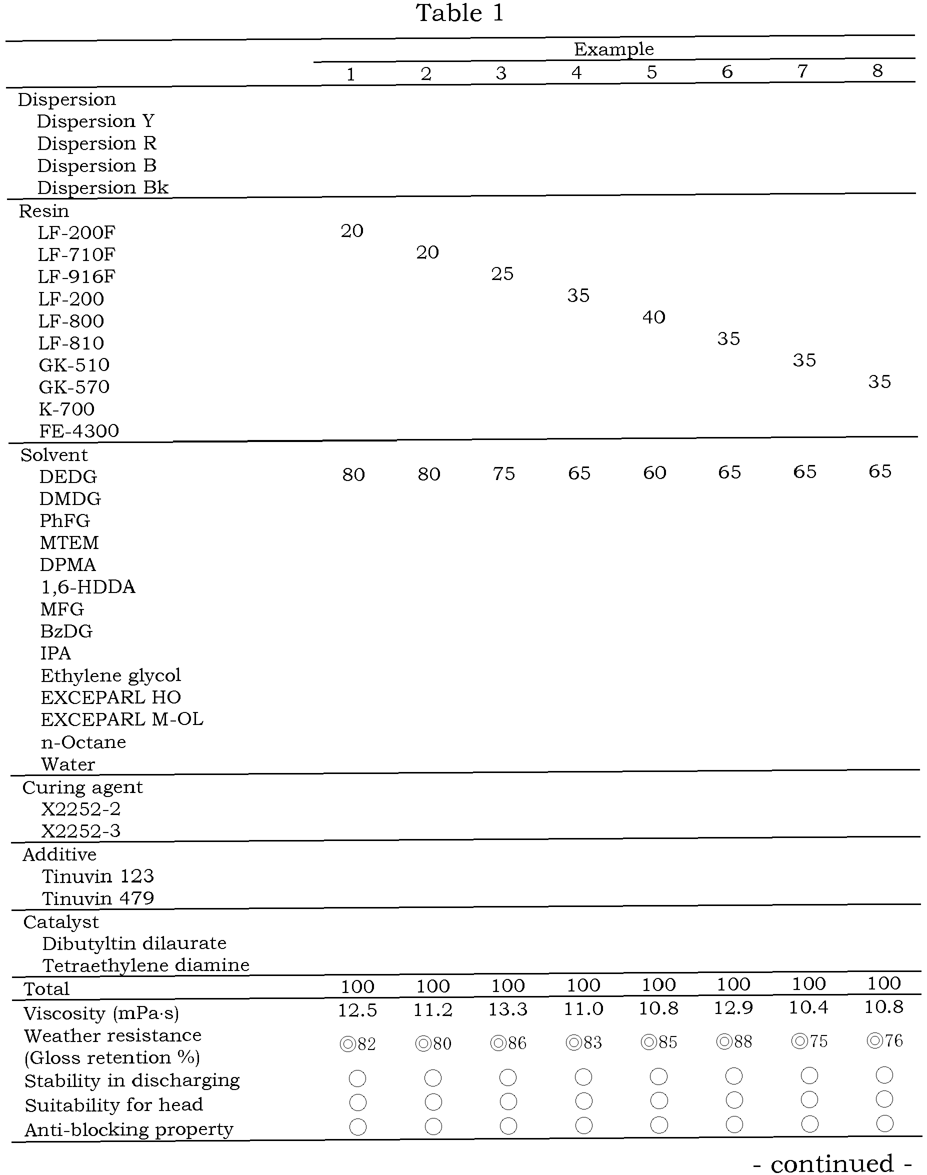

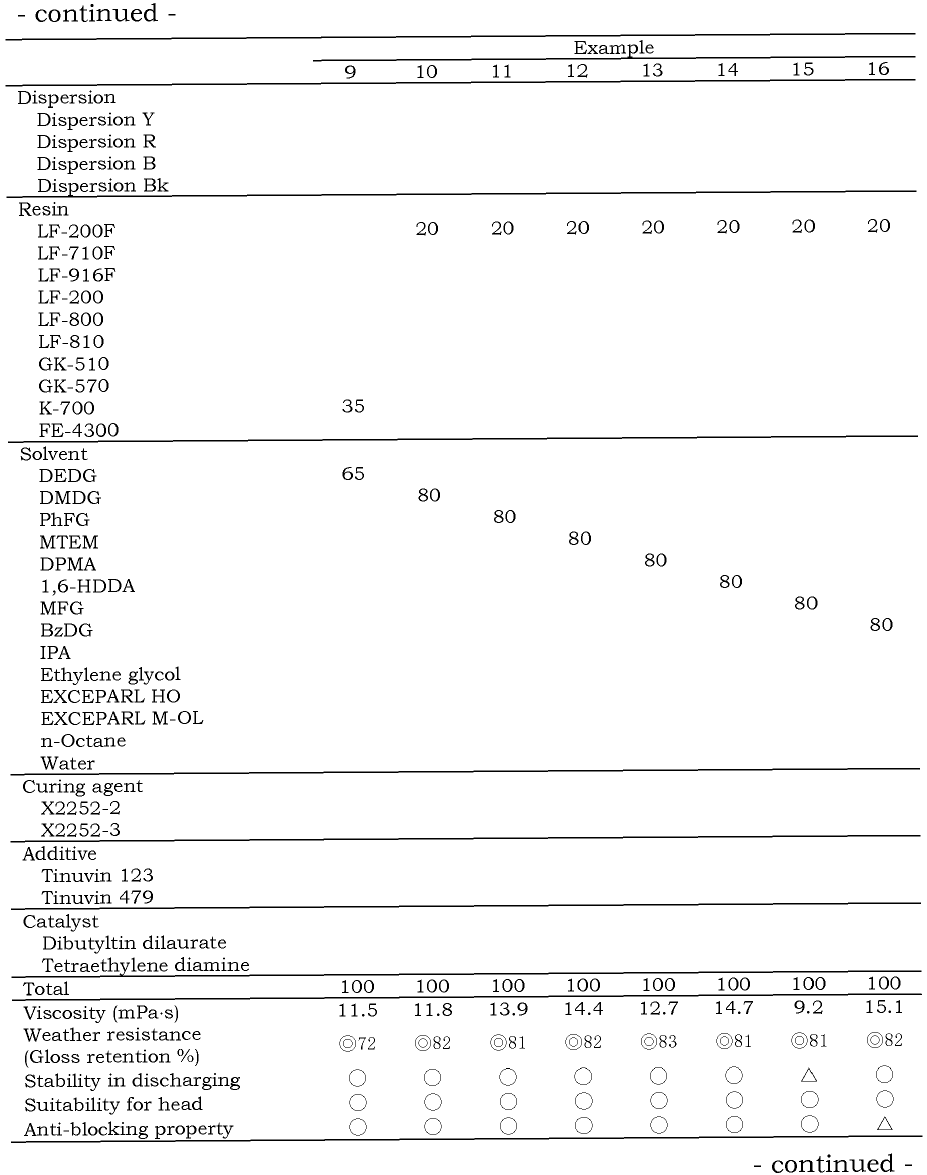

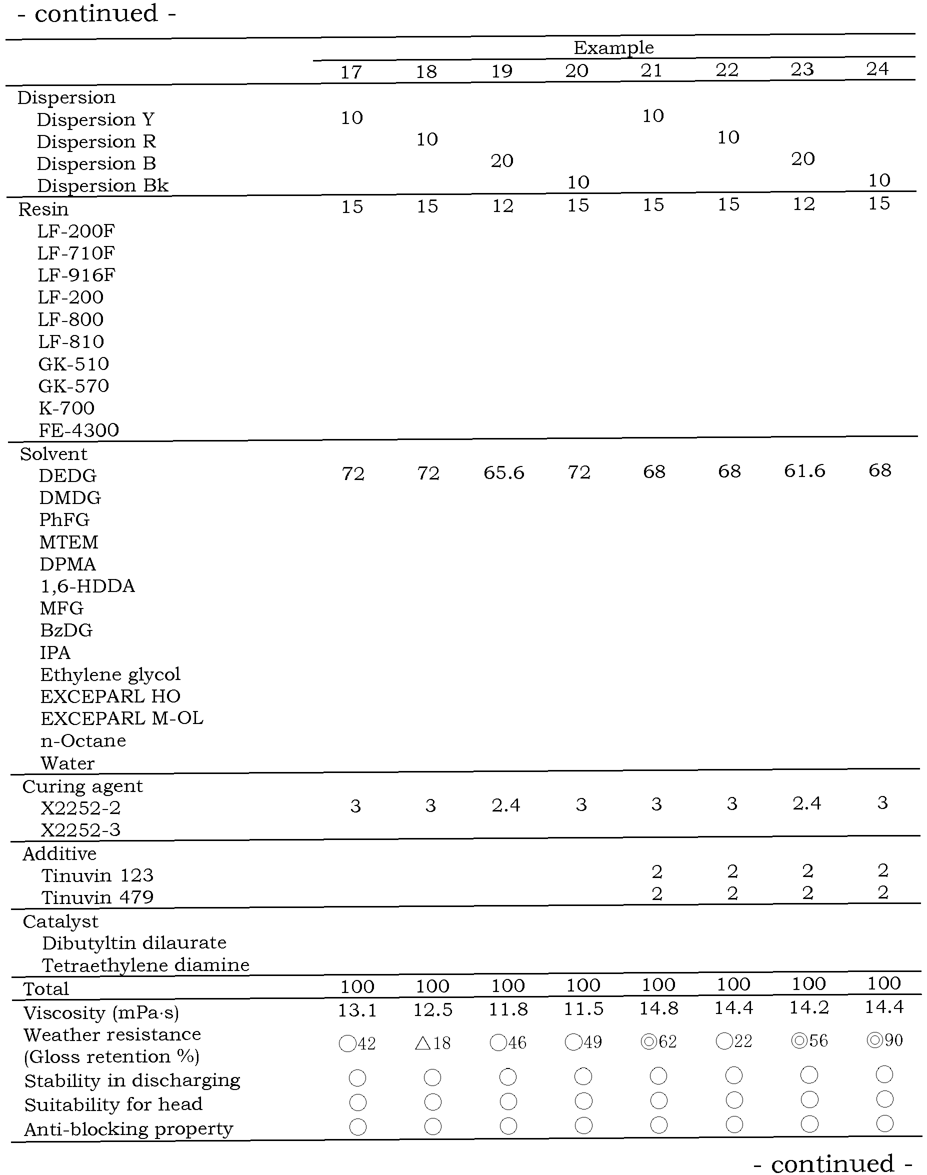

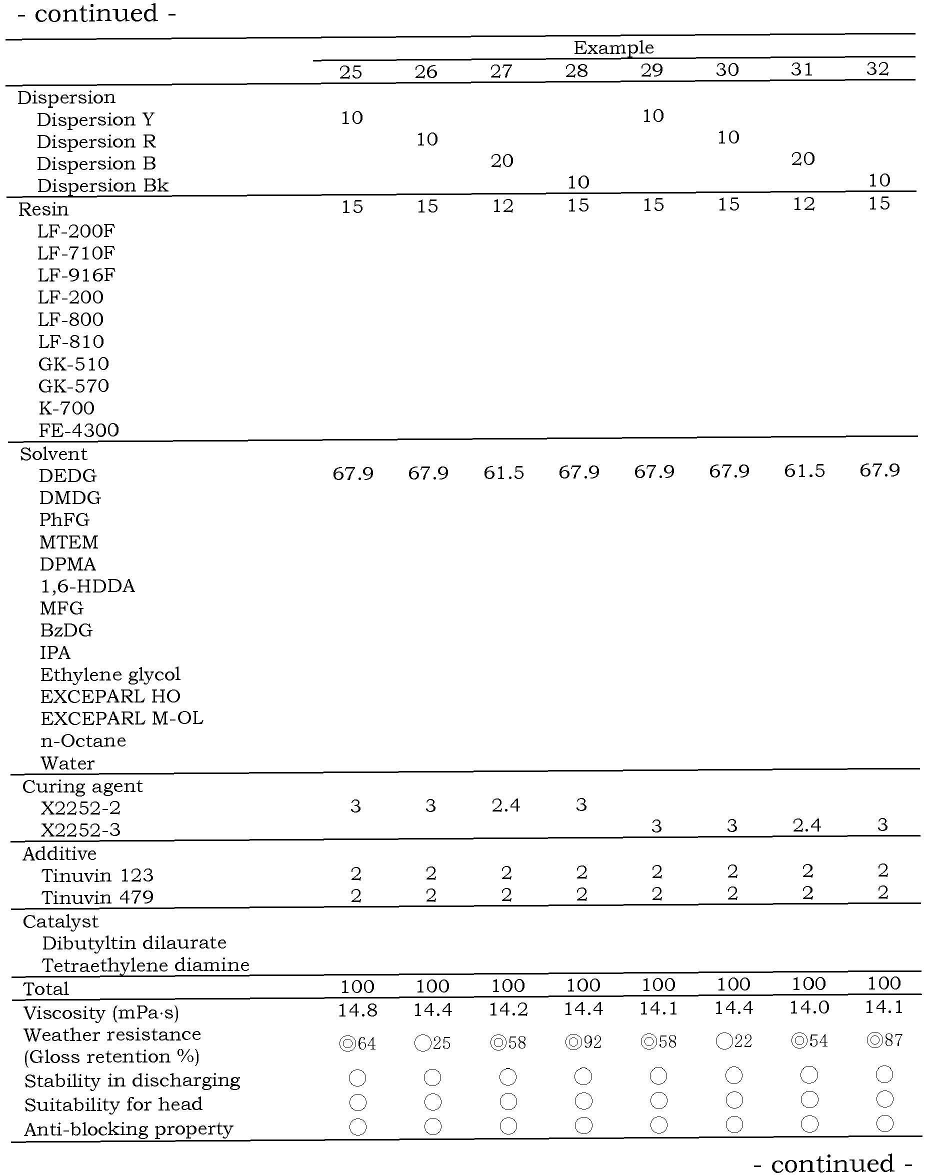

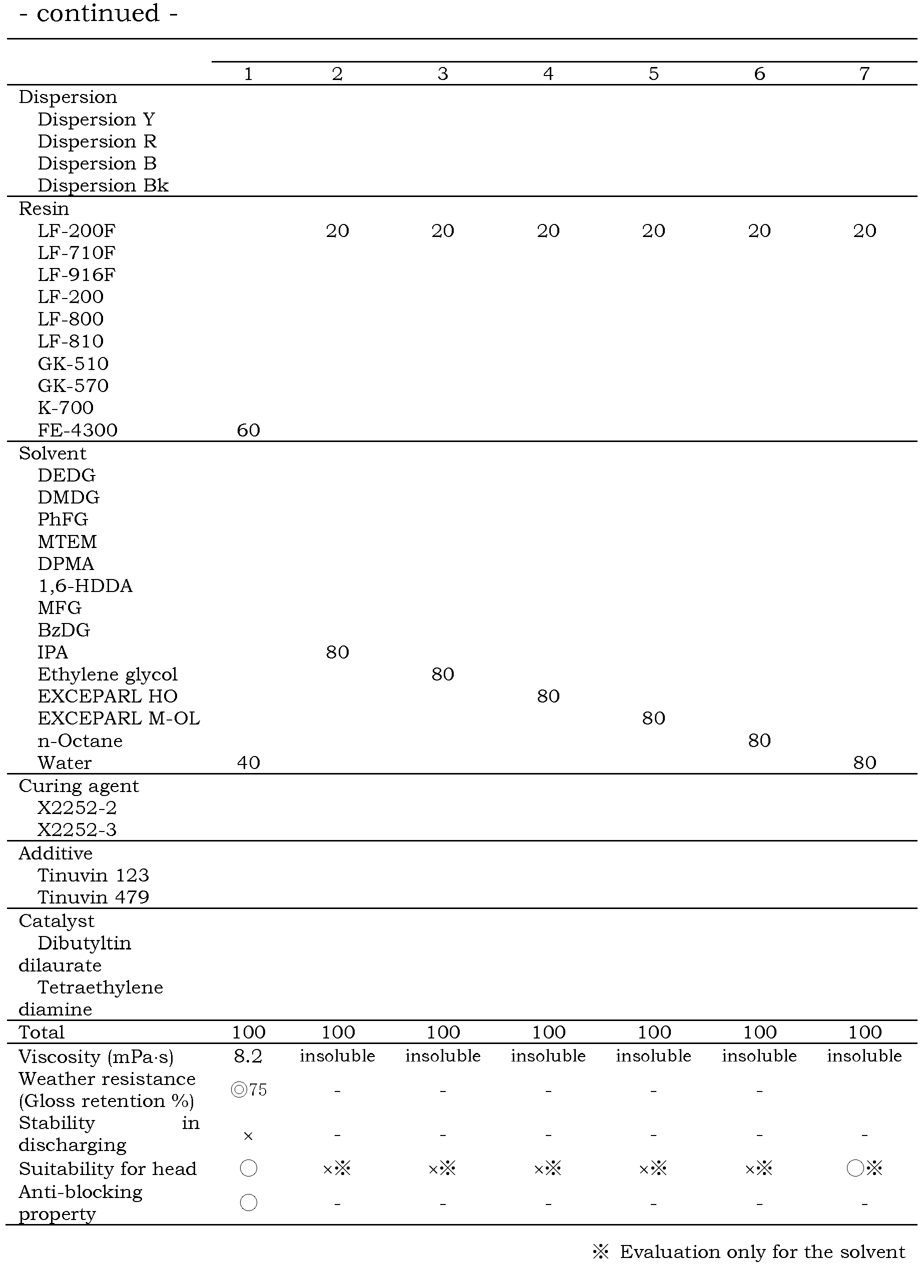

**Table 2**

| | Example | | | | | Com. Ex. |
|---|---|---|---|---|---|---|
| | 1 | 33 | 34 | 35 | 36 | 8 |
| Resin | | | | | | |
| LF-200F | 20 | 20 | 20 | 20 | 20 | 20 |

| Solvent | | | | | | |
|---|---|---|---|---|---|---|
| DEDG | 80 | | | | | |
| IPDM | | 80 | | | | |
| MTPOM | | | 80 | | | |
| BDM | | | | 80 | | |
| PGDA | | | | | 80 | |
| Butyl cellosolve | | | | | | 80 |
| Total | 100 | 100 | 100 | 100 | 100 | 100 |
| Viscosity (mPa·s) | 12.5 | 12.2 | 14.8 | 14.4 | 13.7 | 15.5 |
| Weather resistance (Gloss retention %) | ⊚82 | ⊚81 | ⊚84 | ⊚82 | ⊚80 | ⊚81 |
| Stability in discharging | ○ | ○ | ○ | ○ | ○ | Δ |
| Suitability for head | ○ | ○ | ○ | ○ | ○ | × |
| Anti-blocking property | ○ | ○ | ○ | ○ | ○ | ○ |

### <Inkjet conditions>

Inkjet recording apparatus: Piezo type
Nozzle diameter: 40 µm
Driving voltage: 70 V
Frequency: 12 kHz
Resolution: 400 × 800 dpi
Substrate temperature: 60°C (heating)

### <Drying conditions>

### Drying by heating (under a temperature of 200°C, one minute)

Inks and printed matters obtained in Examples 1 to 36 and Comparative Examples 1 to 8 were subjected to evaluation by the following evaluation methods in accordance with the following criteria.

The results are shown in Tables 1 or 2.

### <Weather resistance>

The printed matters were subjected to 6-hour ultraviolet irradiation (UV irradiation conditions: 100 mW/cm², temperature: 63°C, humidity: 50%) as a ultra-accelerated weathering test using SUPER UV TESTER (SUV-W161 manufactured by IWASAKI ELECTRIC CO., LTD.), and then after 30-minute showering, were subjected to 2-hour dew formation of one cycle, totally 600 hours by the course of nature. Thereafter, gloss retention was measured.

### (Method of measuring gloss retention)

Gloss retention is a ratio of gloss after the ultra-accelerated weathering test to gloss before the ultra-accelerated weathering test. The gloss was measured using Gloss Checker (IG-410 manufactured by Horiba, Ltd.)

### (Evaluation criteria)

⊚ : Gloss retention was 50% or more.
○ : Gloss retention was 20% or more and less than 50%
Δ : Gloss retention was 10% or more and less than 20%
× : Gloss retention was less than 10%

### <Stability in discharging>

Clogging of a nozzle was checked while discharging continuously for 60 minutes and after allowing to stand after discharging.

### (Evaluation criteria)

○ : No clogging of a nozzle occurred

Δ : No clogging of a nozzle occurred while discharging continuously or after allowing to stand for ten minutes after discharging
× : Clogging of a nozzle occurred while discharging continuously and after allowing to stand for ten minutes after discharging

### <Suitability for head>

An adhesive used for a head (epoxy resin) was dipped in an ink for one month, and a change of the adhesive was checked. Epoxy resins EXA-8464 (bisphenol urethane-modified epoxy resin manufactured by DIC CORPORATION) and WH-619 (aromatic polyamine epoxy resin manufactured by DIC CORPORATION) were mixed in a ratio of 10:3 and a mixture was subjected to 3-hour drying at 90°C to prepare a coating film. Next, the prepared coating film was cut into a piece of 3 cm square to obtain an adhesive used for a head (epoxy resin) for evaluation.

### (Evaluation criteria)

○ : Any of a weight change of ±5% or more, blister and whitening was not found on an adhesive used for a head (epoxy resin) after one month dipping.
× : A change of at least one of a weight change of ±5% or more, blister and whitening was found on an adhesive used for a head (epoxy resin) after one month dipping.

### <Anti-blocking property>

Printed matters of 10 cm² were laid to overlap each other under a temperature of 50°C and a load of 2 kg was applied thereto. Twenty-four hours after, the printed matters were peeled off.

### (Evaluation criteria)

○ : Printed matters could be peeled off easily.
Δ : Printed matters were somewhat stuck to each other, but was peelable.
× : Printed matters were stuck to each other, and could not be peeled off or was difficult to peel.

As shown in Tables 1 and 2, in any of the inks obtained in Examples 1 to 36 of the present invention, printed matters having gloss retention of 10% or more could be obtained. Further, in these inks, clogging was hard to occur at inkjet printing, and suitability for a head was also good. In any of the obtained printed matters, blocking was hard to occur.

Meanwhile, in the ink of Comparative Example 1 prepared using a solvent having an SP vale out of a range of 7 to 11, clogging was apt to occur at inkjet printing. Similarly in the inks of Comparative Examples 2 to 7 prepared using a solvent having an SP vale out of a range of 7 to 11, a fluorine resin could not be dissolved therein. Further, in the ink of Comparative Example 8, clogging occurred, and blister and whitening of an adhesive used for a head were generated. Among these inks, in the case of solvents used in Comparative Examples 2 to 6 and 8, heads were easily damaged.

## Claims

1. An ink comprising a fluorine resin and a solvent having a solubility parameter value (SP vale) of 7 to 11,
wherein the fluorine resin having:
a solubility of 500 (g/L) or more in diethylene glycol diethyl ether and
a hydroxyl value of 20 to 100 mg KOH/g,
wherein the fluorine resin is contained in the ink in an amount of 40% by mass or less,
wherein an amount of the solvent in the ink is 50% by mass or more,
wherein the solvent comprises at least one glycol ether solvent selected from the group consisting of diethylene glycol diethyl ether, diethylene glycol dimethyl ether, diethylene glycol isopropyl methyl ether, tripropylene glycol dimethyl ether, diethylene glycol butyl methyl ether, propylene glycol monophenyl ether, tetraethylene glycol dimethyl ether, propylene glycol monomethyl ether and ethylene glycol monobenzyl ether, or at least one acetate solvent selected from the group consisting of propylene glycol diacetate, dipropylene glycol methyl ether acetate and 1,6-hexanediol diacetate, and
wherein the ink is applied to a substrate by an inkjet printing method.

2. The ink of claim 1, wherein a resin component consists of the fluorine resin.

3. The ink of claim 1 or 2, wherein a boiling point of the solvent is 150 to 300°C.

4. The ink of any one of claims 1 to 3, wherein a weight-average molecular weight of the fluorine resin is from 5,000 to 50,000.

5. The ink of any one of claims 1 to 4, wherein the fluorine resin is a copolymer of fluoroethylene and a vinyl monomer.

6. The ink of any one of claims 1 to 5, wherein the fluorine resin is contained in the ink in an amount of 5 to 40% by mass.

7. The ink of any one of claims 1 to 6, wherein an hydroxyl value of the fluorine resin is 5 mg KOH/g or less.

8. The ink of any one of claims 1 to 7, wherein the fluorine resin is in a solid state containing no solvent and is soluble in the solvent.

9. The ink of any one of claims 1 to 8, wherein solubility of the fluorine resin in water is 50 (g/L) or less.

10. The ink of any one of claims 1 to 9, wherein the fluorine resin is an alternating copolymer of fluoroethylene and a vinyl monomer.

11. The ink of any one of claims 1 to 10, comprising a non-yellowing blocked isocyanate.

12. The ink of claim 11, wherein the non-yellowing blocked isocyanate has an isocyanurate structure.

13. The ink of any one of claims 1 to 12, comprising at least either of an ultraviolet absorber or a light stabilizer.

14. The ink of any one of claims 1 to 13, comprising dibutyltin dilaurate.

15. A method for producing a printed matter, the method comprising a step of applying the ink of any one of claims 1 to 14 to a substrate by an inkjet printing method.
